Europäisches Patentamt

European Patent Office

Office européen des brevets

(19)

(11) Numéro de publication: **0 375 548**

**A1**

(12) **DEMANDE DE BREVET EUROPEEN**

(21) Numéro de dépôt: **89403577.3**

(22) Date de dépôt: **20.12.89**

(51) Int. Cl.⁵: **C03B 8/02, C03C 3/06,**
**C01B 33/155, C03C 1/00**

(30) Priorité: **23.12.88 FR 8817071**

(43) Date de publication de la demande:
**27.06.90 Bulletin 90/26**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Belot, Valérie, Résidence Parc de**
**l'Académie,**
**Appartement 148 - 2153 Route de Mende/**
**F-34090 Montpellier(FR)**
Inventeur: **Corriu, Robert**
**246, rue de l'Esterou**
**F-34100 Montpellier(FR)**
Inventeur: **Leclerc, Dominique**
**Lot. des Delphines- Saint Clément La Rivière**
**F-34980 Saint-Gely Du Fesc(FR)**
Inventeur: **Pauthe, Monique**
**749, avenue du Pic Saint-Loup/ Clos St**
**Joseph**
**F-34100 Montpellier(FR)**
Inventeur: **Phalippou, Jean**
**203, route de Mende**
**F-34980 Montferrier S/LEZ(FR)**
Inventeur: **Vioux, André**
**avenue de Monsieur Teste- Les Vergers du**
**Peyrou**
**F-34100 Montpellier(FR)**

(74) Mandataire: **Dubruc, Philippe et al**
**RHONE-POULENC CHIMIE Service Brevets**
**Chimie 25, quai Paul-Doumer**
**F-92408 Courbevoie Cédex(FR)**

(54) **Précurseurs de verres d'oxynitrure de silicium, gels de silice pour la préparation de ces précurseurs, verres d'oxynitrure de silicium obtenus à partir de ces précurseurs et procédés de préparation de ces produits.**

(57) L'invention concerne un gel de silice, un précurseur pour verre d'oxynitrure de silicium obtenu par nituration de ce gel et un verre obtenu par densification de ce précurseur.

Le gel de l'invention est préparé par un procédé comprenant une hydrolyse d'un composé organosilane comportant au moins une liaison Si-H, notamment un trialcoxysilane éventuellement en milieu solvant.

La nituration d'un tel gel conduit à un précurseur à haute teneur en azote.

# PRECURSEURS DE VERRES D'OXYNITRURE DE SILICIUM GELS DE SILICE POUR LA PREPARATION DE CES PRECURSEURS, VERRES D'OXYNITRURE DE SILICIUM OBTENUS A PARTIR DE CES PRECURSEURS ET PROCEDES DE PREPARATION DE CES PRODUITS

La présente invention concerne des précurseurs de verres d'oxynitrure de silicium. Elle concerne aussi les gels de silice servant à la préparation de ces précurseurs ainsi que les verres d'oxynitrure de silicium obtenus à partir de ces précurseurs. L'invention est enfin relative aux procédés de préparation de chacun de ces produits.

Les verres d'oxynitrure de silicium sont des produits intéressants car on a montré que l'introduction d'azote permet d'améliorer certaines caractéristiques physiques des verres : augmentation de l'indice de réfraction, de la température de transition vitreuse, de la température de ramollissement. Cette introduction permet d'améliorer aussi les propriétés mécaniques : dureté, modules élastiques et les propriétés chimiques : durabilité. De plus, il a été démontré, dans les applications électroniques que la présence d'azote dans un verre empêche la diffusion des éléments alcalins.

Les verres d'oxynitrure de silicium pur, massif sont impossibles à réaliser par fusion en raison de la force viscosité de la fonte. Il faut alors élever la température au-dela de 1 800°C ce qui entraîne la décomposition de la silice suivant la réaction

$SiO_2 (1) \rightarrow SiO (g) + 1/2 O_2 (g)$

C'est pourquoi on s'est tourné vers d'autres voies, notamment des procédés de nitruration de gels poreux. Les gels poreux sont généralement obtenus par des procédés sol-gel mettant en oeuvre une hydrolyse d'alcoxysilanes du type tétraalcoxysilanes.

Toutefois, les procédés de ce type, s'ils permettent d'obtenir des verres à des températures nettement plus basses que celle de la première méthode évoquée, ne peuvent conduire qu'à des verres dont la teneur en azote est limitée, de l'ordre de 1 % environ. On ne peut augmenter cette teneur qu'en ne faisant entrer dans la préparation et la composition du verre d'autres éléments tels que le bore ou l'aluminium par exemple.

La préparation de verres à haute teneur en azote et sans autre élément pose donc un problème et c'est ce problème que la présente invention permet de résoudre.

Un premier objet de l'invention est donc un verre à base essentiellement de silice et d'azote et à teneur élevée en azote ainsi qu'un procédé de préparation d'un tel type de verre.

Un second objet de l'invention est un précurseur utilisable dans la préparation d'un verre du type précité ainsi qu'un procédé d'obtention de ce précurseur.

Un troisième objet de l'invention est un gel de silice susceptible d'être nitruré et donnant accès au précurseur précité ainsi qu'un procédé de préparation de ce gel.

Dans ce but, le gel de silice selon l'invention, est caractérisé en ce qu'il est susceptible d'être obtenu par un procédé comprenant une étape d'hydrolyse d'un composé organosilane comprenant au moins une liaison Si-H. Plus particulièrement, ce composé organosilane peut être un trialcoxysilane.

Plus particulièrement, le gel de silice selon l'invention est un gel, qui, lorsqu' il est porté à une température de 200°C sous azote, puis chauffé à différentes températures $T_n$ supérieures à 200°C sous ammoniac et enfin refroidi jusqu'à la température ambiante sous azote, montre une évolution structurale caractérisée par la présence, l'apparition ou la disparition des bandes ci-dessous sur son spectre infrarouge :

| Température Tₙ °C | Bandes (cm⁻¹) | | | | | | |
|---|---|---|---|---|---|---|---|
| | 940-970 | 1040 | 1550 | 2250 | 3400 | 3500 | 3600 |
| 300 | Apparition | Présente | | Présente | | | |
| 450 500 650 | Disparition | Se déplace vers des fréquences plus faibles | Apparition | Diminution progressive de 300°C à 900°C | Apparition | Apparition | Apparition Disparition |
| 700 | | | Disparition | | Se déplace vers 3 380 | Disparition | Apparition |
| >900 | | Se déplace vers 960 cm⁻¹ | | très faible | Disparition | Disparition | Disparition |

Par ailleurs, le précurseur de verre d'oxynitrure de silicium à base de silice et d'azote selon l'invention est caractérisé en ce qu'il est susceptible d'être obtenu par une nitruration d'un gel tel que défini plus haut.

En particulier, le précurseur de verre d'oxynitrure de silicium à base de silice et d'azote, selon l'invention, est caractérisé en ce qu'au cours d'un traitement thermique sous air, il présente un retrait apparent entre la température ambiante et 180°C puis une expansion entre 180°C et 750°C et enfin un frittage pour les températures supérieures.

Par ailleurs, le précurseur de verre d'oxynitrure de silicium, à base de silice et d'azote selon l'invention, est caractérisé en ce qu'il présente, lorsqu'il est soumis à une montée en température une phase de frittage débutant vers 600°C et se terminant vers 1 450°C, cette phase de frittage étant suivie, vers 1 450°C d'une phase de dilatation.

Enfin, le verre d'oxynitrure de silicium de l'invention est caractérisé en ce qu'il est susceptible d'être obtenu par densification d'un précurseur tel que défini ci-dessus.

Notamment, le verre d'oxynitrure de silicium, selon l'invention est caractérisé en ce qu'il est essentiellement à base de silice et d'azote, en ce qu'il présente une teneur en azote d'au moins 3 % en poids, plus particulièrement d'au moins 4 %, une densité d'au moins 2,25 plus particulièrement d'au moins 2,30.

D'autres caractéristiques et avantages de l'invention seront mieux compris à la lecture de la description et des exemples plus concrets mais non limitatifs qui vont suivre.

Il est précisé ici et pour l'ensemble de la description que l'invention concerne des nouveaux gels, des précurseurs de verres d'oxynitrures de silicium et des verres d'oxynitrures de silicium en tant que tels, ces produits pouvant être définis notamment par leur procédé de préparation. En conséquence, même en l'absence de précisions contraires, tout l'enseignement de la présente description sur quelque caractéristique ou étape que ce soit des différents procédés décrits, s'applique aussi au produit en tant que tel susceptible d'être obtenu par le procédé mettant en oeuvre cette caractéristique ou étape. Les différents produits de l'invention vont maintenant être étudiés successivement.

## LES GELS

Comme indiqué plus haut, le gel de silice de l'invention est susceptible d'être obtenu par un procédé mettant en oeuvre une hydrolyse d'un composé organosilane comprenant au moins une liaison Si-H. La caractéristique importante du procédé réside dans le choix comme produit de départ pour l'hydrolyse d'un tel type de composés. On utilise notamment comme tels composés ceux de formules $R_x SiH_{4-x}$ où x est un nombre entier variant entre 1 et 3 et R un radical organique. Selon un mode de réalisation particulier de l'invention, le produit de départ est un trialcoxysilane.

Celui-ci pourra être choisi parmi les composés de formule $HSiOR_1 OR_2 OR_3$ dans laquelle $R_1$, $R_2$, $R_3$ sont des radicaux alkyles identiques ou différents. On utilise plus particulièrement ceux pour lesquels les radicaux $R_1$, $R_2$, $R_3$ sont des méthyle ou éthyle, notamment ceux pour lesquels $R_1$, $R_2$, $R_3$ sont tous

identiques. Selon un mode particulier de l'invention, on utilise le triéthoxysilane.

Selon un mode de réalisation particulier de l'invention, l'hydrolyse pourra s'effectuer dans un solvant.

Généralement, on utilisera des solvants miscibles à l'eau. Comme type de solvants convenables, on peut mentionner les alcools.

En ce qui concerne les alcools, on utilise généralement un alcool saturé. De préférence, cet alcool est l'homologue des radicaux $R_1$, $R_2$, $R_3$ du trialcoxysilane, plus particulièrement il peut s'agir de l'éthanol.

Comme autre type de solvants utilisables, on peut citer les cétones et notamment l'acétone.

On peut aussi choisir le solvant dans le groupe des nitriles ou des éthers-oxydes. A titre d'exemple de solvants de ces groupes, on peut mentionner l'acétonitrile, le dioxanne ou le tétrahydrofuranne.

De préférence, l'hydrolyse se fait en milieu neutre. Toutefois, il serait possible de l'effectuer en milieu acide par addition au milieu réactionnel d'un acide fort type HCl par exemple.

Il est à noter que selon un autre mode de réalisation particulier de l'invention, l'hydrolyse peut être réalisée directement en l'absence de tout solvant.

Généralement, l'hydrolyse se fait par addition d'eau à la solution du composé organosilane, notamment du trialcoxysilane dans le solvant ou directement sur ce composé en fonction du mode de réalisation choisi parmi ceux qui viennent d'être décrits plus haut.

L'addition d'eau peut se faire avec ou sans agitation, à température ambiante ou à une température inférieure.

Dans le cas d'une hydrolyse en milieu solvant, il est à noter que le composé organosilane, notamment trialcoxysilane peut être plus ou moins dilué dans le solvant au démarrage de la réaction. C'est ainsi que selon un premier mode, on peut opérer, pour l'étape d'hydrolyse, avec un milieu dans lequel, au départ, le rapport volume de composé organosilane/volume de solvant est d'environ 1.

Selon un autre mode, on peut partir pour l'étape d'hydrolyse avec un milieu dans lequel le rapport volume de composé organosilane/volume de solvant est d'environ 0,1.

Les modes de dilution précités et les quantités d'eau utilisées pour l'hydrolyse seront choisis d'une manière connue en soi en fonction du type de produit que l'on cherche à obtenir : gel monolithique, poudre, fibres ou films.

Le gel obtenu à la suite de l'hydrolyse peut subir un mûrissement ou un vieillissement. Cette dernière étape peut se faire soit à température ambiante soit à une température plus élevée soit même successivement à ces deux températures. Le vieillissement peut durer de quelques jours à une semaine par exemple. Généralement, il n'est pas nécessaire de laver le gel obtenu. Néanmoins, si un lavage est souhaité il se fait à l'eau distillée.

Le gel peut être ensuite séché. Ce séchage peut se faire soit à température ambiante soit à une température plus élevée par exemple à 200° C. Il est bien sûr possible de combiner les deux types de séchage de même que de réaliser au moins une partie du séchage sous vide ou pression réduite que ce soit à température ambiante ou plus élevée. La durée du séchage est habituellement de 1 à 4 jours.

Eventuellement, le gel obtenu peut être broyé selon la granulométrie désirée en fonction notamment de l'application que l'on souhaite lui donner, ce broyage pouvant se faire notamment après l'étape de séchage.

Outre les gels susceptibles d'être obtenus par le procédé tel qu'il vient d'être décrit, l'invention concerne aussi un gel présentant une structure bien spécifique. Cette spécificité du gel de l'invention peut se traduire par son évolution structurale lors du traitement sous ammoniac qui va être décrit ci-dessous.

Le gel est utilisé sous forme d'un film d'une épaisseur telle qu'il présente une zone de transparence entre 900 et 1 000 $cm^{-1}$ pour une spectroscopie infrarouge de transmission.

Le film est déposé dans un creuset en alumine et chauffé dans un four selon le programme ci-dessous.

L'échantillon est d'abord porté à 200° C sous azote (vitesse de chauffe : 1° C/mn, temps de palier : 1 heure) puis chauffé à une temperature T1 supérieure à 200° C sous ammoniac (vitesse de chauffe : 2° C/mn, temps de palier : 1 heure) et enfin refroidi jusqu'à la température ambiante sous azote. Le spectre infrarouge est alors enregistré à température ambiante. Ensuite, le même échantillon est porté (après balayage sous azote à température ambiante) à la température T1 précédente sous balayage d'azote (vitesse de chauffe 5° C/mn) puis traité sous ammoniac jusqu'à une température T2 supérieure à T1 (vitesse de chauffe : 2° C/mn, temps de palier 1 heure) et enfin refroidi sous azote. Un autre spectre infrarouge est alors enregistré à température ambiante. Le même échantillon est ainsi porté à diverses températures sous ammoniac (T3, T4, ...).

Des différents spectres ainsi obtenus, on peut suivre l'évolution structurale du gel en fonction de la température, cette évolution étant appréhendée par la présence, l'apparition ou la disparition d'un certain nombre de bandes caractéristiques.

Dans la description de spectres qui va suivre, il est bien entendu que les informations données servent à définir l'allure générale des spectres et qu'ainsi ne sortiraient pas de l'invention des produits présentant des bandes légèrement déplacées par rapport aux nombres d'ondes donnés dans la mesure où le comportement de ces bandes est le même que celui décrit ci-dessous. Par ailleurs, les attributions des bandes sont données à titre indicatif sans vouloir être liées par une théorie.

C'est ainsi qu'à partir de 300° C, on voit apparaître deux bandes à 940-970 cm$^{-1}$. Elle présentent une intensité maximale à 400° C et disparaissent à 500° C. On peut penser que ces bandes seraient dues à la présence de sites qui se seraient constitués à la suite de la rupture des liaisons Si-H.

Par ailleurs, dès 450° C se développent aussi des bandes à 1 550, 3 400, 3 500 et 3 600 cm$^{-1}$.

La bande à 1 550 cm$^{-1}$ caractérise le groupement SiNH$_2$. Habituellement, les vibrations d'allongement asymétrique et symétrique de NH dans le groupement SiNH$_2$ sont localisées vers 3 540 et 3 450 cm$^{-1}$. Dans le cas du gel de l'invention, ces vibrations donnent naissance à des bandes situées à des fréquences plus faibles. La bande à 3 600 cm$^{-1}$ est attribuée à la vibration d'allongement des groupements silanols liés par liaisons hydrogène. On pourrait penser qu'il y a formation dès 450° C d'une amine primaire et, simultanément, de groupements Si-OH. Les bandes de l'amine primaire s'intensifient jusqu'à 650° C. Celle à 3 600 cm$^{-1}$ disparait à 650° C. A 700° C, les bandes situées à 3 500 cm$^{-1}$ et 1 550 cm$^{-1}$ sont éliminées et simultanément la bande à 3 600 cm$^{-1}$ réapparait ; la bande à 3 400 cm$^{-1}$ se déplace légèrement vers 3 380 cm$^{-1}$. L'évolution des bandes à 1 550, 3 400, 3 500 cm$^{-1}$ pourrait être associée à l'apparition d'un groupement silazane

$$Si-\overset{\overset{\displaystyle H}{|}}{N}-Si$$

qui présente une seule vibration d'allongement donnant une bande en général positionnée entre 3 350 et 3 390 cm$^{-1}$. Les bandes situées à 3 600 et à 3 380 cm$^{-1}$ sont encore présentes à 800° C. A 900° C, le spectre révèle que le gel ne contient plus de groupes silanols tandis que l'on peut détecter des traces de silazanes. Aux très hautes températures (supérieures à 900° C), toutes les bandes décrites précédemment disparaissent : on peut alors penser qu'il y a formation de groupements nitrures mais pas de groupements Si-OH comme produits de réaction.

En outre, le spectre du gel selon l'invention présente dans toute la gamme de température donnée ci-dessus une bande à 1 040 cm$^{-1}$ environ correspondant à la vibration d'allongement (Si-O-Si) dans un verre de silice.

Cette bande se déplace vers de plus faibles fréquences au fur et à mesure de la montée en température et se situe vers 960 cm$^{-1}$ au delà de 900° C. L'explication de ce déplacement pourrait être l'existence d'une liaison Si-N qui affecte l'emplacement de la bande d'absorption $\nu$ (Si-O-Si).

Le spectre présente enfin une bande à 2 250 cm$^{-1}$ qui diminue progressivement de 300 à 900° C et qui est très faible en intensité à cette température. Cette bande peut être attribuée à la liaison Si-H.

On notera enfin que le gel de l'invention, avant le traitement thermique qui a été décrit plus haut, possède à température ambiante (25° C) un spectre infrarouge présentant des bandes à 740 cm$^{-1}$ et 2 250 cm$^{-1}$. Cette dernière vient d'être discutée ci-dessus. Celle à - 740 cm$^{-1}$ pourrait provenir de la vibration d'allongement $\nu$ (Si-H). Elle est relativement intense jusqu'à 450° C. On notera enfin que le spectre du gel ne présente généralement pas de bande à 1 620 cm$^{-1}$ et vers 3500 cm$^{-1}$, ce qui signifie qu'il n'y a pas d'eau absorbée à la surface du gel.

Le gel qui vient d'être décrit ci-dessus, ainsi que les gels susceptibles d'être obtenus par le procédé qui a été considéré plus haut possèdent aussi, selon des différents modes de réalisation de l'invention, un certain nombre de caractéristiques supplémentaires.

C'est ainsi que ces gels peuvent présenter une surface spécifique BET (déterminée selon la méthode de BRUNAUER-EMMET-TELLER décrite dans le Journal of the American Chemical Society Vol. 60, page 309, February 1938) d'au moins 480 m$^2$/g, plus particulièrement d'au moins 580 m$^2$/g. Ils ont aussi un volume poreux (déterminé par la méthode BET) d'au moins 260 mm$^3$/g plus particulièrement d'au moins 360 mm$^3$/g.

L'originalité des gels de l'invention tels qu'ils viennent d'être décrits apparaît notamment à travers les deux caractéristiques suivantes.

Tout d'abord, ils sont hydrophobes à une température inférieure à 400°C et hydrophiles à une température supérieure.

Ce comportement peut être mis en évidence en utilisant la spectroscopie infrarouge de transmission sur films minces.

Les échantillons de gel, sous forme de films minces sont traités à différentes températures, refroidis puis exposés à une atmosphère saturée en eau, chaque étape du processus étant effectuée sur un film différent. On constate que les gels de l'invention traités à des températures inférieures ou égales à 400° C et exposés à la vapeur d'eau n'adsorbent pas d'eau moléculaire car il n'y a pas d'apparition de bande d'absorption infrarouge à 1 620 m$^{-1}$ et vers 3500 cm$^{-1}$. Par contre, lorsque la température du traitement thermique est supérieur à 400°C, l'adsorption d'eau est significative jusqu'aux températures les plus élevées (1 000° C).

L'autre caractéristique des gels de l'invention est leur capacité à fixer, de façon irréversible et en quantité importante, de l'azote lors de leur réaction avec l'ammoniac par suite de la formation de sites actifs qui proviennent de la rupture des liaisons Si-H.

Ce comportement peut être relié notamment à l'étude des spectres infrarouges decrits plus haut au sujet du traitement par l'ammoniac à différentes températures du gel de l'invention. Il semblerait, en effet, que le maintien irréversible d'un important pourcentage d'azote soit associé à la présence des bandes de vibration infrarouge situées à 940-970 cm$^{-1}$ et aussi à la formation du groupement Si-NH-Si, groupement dont l'apparition peut être reliée, comme on l'a vu plus haut à l'évolution des bandes 1 550, 3 400 et 3 500 cm$^{-1}$.

D'une manière générale, les gels de l'invention sont susceptibles de fixer une quantité d'azote d'au moins 3 % en poids. C'est pourquoi ces gels sont particulièrement utiles à la préparation de précurseurs pour verres d'oxynitrure de silicium et ce sont ces précurseurs qui vont être étudiés maintenant ci-dessous.

## LES PRECURSEURS DE VERRES D'OXYNITRURES DE SILICIUM

Les précurseurs, selon l'invention, sont susceptibles d'être obtenus par une nitruration des gels qui viennent d'être décrits.

Cette nitruration comprend habituellement un traitement thermique d'un gel à une température d'au moins 200° C en présence d'un agent nitrurant qui généralement est l'ammoniac.

Préalablement à ce traitement thermique, il est possible d'effectuer un séchage du gel. Ce séchage peut se faire sous azote par exemple à 200° C pendant environ une heure. Il peut venir en complément du séchage qui a été mentionné plus haut, après la synthèse du gel.

Le traitement thermique proprement dit peut se faire, au moins en partie, à une température variable dans le temps. On entend par là que l'on peut soumettre le gel à une montée en température progressive (par exemple de l'ordre de 1 à 10° C/minute) puis maintenir la température en palier sur une durée de 1 à 5 heures. La température du traitement thermique de nitruration peut être d'environ 700° C.

La nitruration du gel peut éventuellement être complétée notamment postérieurement au traitement thermique précité par un traitement sous ammoniac ou gaz inerte tel que l'azote ou l'argon. Ce traitement se fait généralement à une température supérieure à celle du traitement précité par exemple à au moins 700° C, plus particulièrement au moins 1 100° C. Le traitement peut aussi se faire au moins en partie à température variable dans le temps. Par exemple, on peut chauffer le gel à une vitesse de chauffe de 1 à 10° C/minute puis le maintenir en palier de 1 à 5 heures.

Le gel nitruré est enfin refroidi, notamment sous gaz inerte tel que l'azote.

Les précurseurs, selon l'invention, notamment ceux susceptibles d'être obtenus par le procédé qui vient d'être décrit, se caractérisent de plusieurs manières.

Tout d'abord, lors d'un traitement thermique sous air, ils présentent un retrait apparent entre la temperature ambiante et 180° C puis une expansion entre 180° C et 750° C et enfin un frittage pour les températures supérieures. Le frittage s'effectue par écoulement visqueux.

Cette variation dimensionnelle a été mise en évidence dans les conditions suivantes.

On forme, tout d'abord, des pastilles par compactage d'un gel de l'invention, sous forme de poudre, à froid, sous une pression de 1,5 tonne/cm². Les pastilles obtenues subissent ensuite un traitement thermique dans les conditions suivantes : chauffage à 700° C sous ammoniac avec une vitesse de chauffe de 2° C/mn puis palier de 1 heure à 700° C et enfin refroidissement sous azote puis second chauffage jusqu'à 1 000° C sous azote avec une vitesse de chauffe 4° C/mn, un palier de 1 heure à 1 000° C et enfin refroidissement sous azote.

Les précurseurs ainsi obtenus sont traités thermiquement sous air à une vitesse de 5° C/mn. On mesure alors la dilatation relative :

$$\frac{\Delta L}{L_o} = \frac{L - L_o}{L_o}$$

où $L_o$ est la longueur initiale de l'échantillon et $L$ sa longueur à la température T. Comme indiqué plus haut, cette dilatation est négative puis redevient positive et enfin de nouveau négative aux températures mentionnées ci-dessus.

Par ailleurs, les précurseurs de l'invention présentent un comportement spécifique au frittage. Ce frittage des précurseurs a été étudié dans les conditions suivantes. Des pastilles ont été préparées par compactage des poudres à température ambiante sous une pression de 1,5 tonne/cm². L'étude dilatométrique a été faite avec une vitesse de chauffe de 10°C/mn et la température maximale atteinte est de 1 500°C. Dans ces conditions, on observe un début de frittage vers 600°C. Le frittage devient significatif vers 1 070°C et il se termine vers 1 400°C, température où les produits commencent à se dilater. On peut observer pour la phase de frittage un retrait total du produit de l'ordre de 20 % et une dilatation de 1,5 % mesurée jusqu'à 1 500°C.

Par ailleurs, si l'on considère la courbe de frittage, celle-ci présente un point d'inflexion situé entre 1 120 et 1 200°C ce qui correspond à un maximum de la vitesse de frittage dans ce domaine de température.

Une autre caractéristique essentielle des précurseurs, selon l'invention, est qu'ils sont essentiellement à base de silice et d'azote et que leur teneur en azote est d'au moins 3 % en poids et plus particulièrement d'au moins 4 %. Des teneurs supérieures à 4,5 % peuvent être obtenues. La détermination de ce taux est effectué par la méthode de KJELDAHL basée sur la réaction à 400°C de l'échantillon, sous forme de poudre, avec de la potasse fondue qui déplace l'azote sous forme d'ammoniac.

Cette caractéristique de ces précurseurs les rend particulièrement aptes à la préparation de verres d'oxynitrures de silicium à haute teneur en azote. Ces verres vont maintenant être décrits plus particulièrement.


## LES VERRES D'OXYNITRURES DE SILICIUM

Comme on l'a vu déjà, les verres de l'invention sont essentiellement à base de silice et d'azote. Ils sont généralement transparents ou sensiblement transparents, ils peuvent se présenter sous forme massique ou de fibres ou de films . Ils présentent, pour les verres massiques, une teneur en azote d'au moins 3 % en poids, plus particulièrement d'au moins 4 %. Des verres à au moins 4,5 % d'azote peuvent être obtenus.

La détermination du taux d'azote est faite selon la méthode qui vient juste d'être indiquée ci-dessus pour les précurseurs.

Généralement, leur densité apparente est d'au moins 2,25 et plus particulièrement d'au moins 2,30. La mesure de densité a été réalisée par la méthode d'ARCHIMEDE par l'immersion dans l'eau distillée de pastilles de verres obtenus par pressage à 40 MPa à la température de densification.

Par ailleurs, la spectrométrie infrarouge de transmission sur des échantillons massifs polis permet de montrer que les verres de l'invention ne contiennent plus d'eau résiduelle. En effet, les spectres ne présentent aucune bande vers 3 600 - 3 660 cm$^{-1}$.

Les verres de l'invention se caractérisent aussi par leur propriétés thermiques. Notamment, ils présentent une température de début de ramollissement d'au moins 900°C, plus particulièrement d'au moins 1 000°C.

La température de début de ramollissement ci-dessus a été déduite de courbes dilatométriques. Ces courbes ont été tracées à partir d'échantil- lons, de forme parallélépipédique, de dimension 18 x 3 x 1,5 mm. La vitesse de montée en température est de 5°C/mn.

La température de début de ramollissement est définie par dilatométrie comme la température pour laquelle le verre flue sous le seul effet des poussoirs. Elle est donnée par la température correspondant au maximum de la courbe représentant, en fonction de la température, la dilatation relative :

$$\frac{\Delta L}{L_o} = \frac{L - L_o}{L_o}$$

où $L_o$ est la longueur initiale de l'échantillon, $L$ sa longueur à la température $T$.

Les verres de l'invention présentent aussi des propriétés mécaniques spécifiques.

Les propriétés mécaniques ont été déterminées par la technique d'impulsion d'ondes ultrasonores engendrées par un matériau piézoélectrique. Cette méthode permet de préciser les vitesses des ondes longitudinales et des ondes transverses et, par suite, d'accéder aux modules d'YOUNG (module dynamique) de torsion et de compression volumique.

Ils ont ainsi un module d'YOUNG d'au moins 80 GPa notamment d'au moins 90 GPa.

A titre de comparaison, on peut indiquer que pour un verre à 1 % d'azote le module d'YOUNG est de 77 GPa.

Enfin, les verres de l'invention présentent une durabilité chimique améliorée. L'étude du comportement des verres par rapport à l'attaque chimique a été faite par mesures des pertes en poids d'échantillons de forme parallélépipédique dont la taille est environ 8 x 3 x 1,5 mm, de masse pratiquement constante, immergés dans une solution d'acide fluorhydrique (de concentration volumique en HF de 50 %) à 20° C. Les échantillons sont suspendus, au moyen de fils en platine, dans la solution test placée dans un récipient en polyéthylène fermé et maintenu à 20° C. Après un temps d'attaque choisi, l'échantillon est enlevé, rincé avec de l'eau distillée, séché à 100° C pendant 1/2 heure, puis pesé.

La perte en poids des divers échantillons, ramenée à l'unité de surface par la relation :

$$\frac{\Delta m}{So} = \frac{\text{masse initiale} - \text{masse finale}}{\text{surface initiale}} \quad (\text{en } mg/cm^2)$$

est mesurée pour différents temps d'attaque.

Pour un temps d'attaque de 30 heures, la perte en poids des verres de l'invention est d'au plus 50mg/cm$^2$.

D'autre part, l'invention concerne aussi les verres susceptibles d'être obtenus par le procédé qui va maintenant être décrit.

Ce procédé consiste essentiellement à densifier les précurseurs qui ont été étudiés plus haut.

Cette densification peut se faire par traitement thermique avec essentiellement un pressage, par exemple dans un four sur lequel est adapté une presse hydraulique. Le traitement thermique se fait à une température variable suivant la teneur en azote généralement compris entre 1 500 et 1 600° C.

D'une manière avantageuse, le densification peut comprendre en outre un traitement thermique de déshydratation, plus particulièrement deux. Dans le cas de deux traitements, ceux-ci peuvent se faire à des températures d'au moins 400° C et d'au moins 650° C respectivement.

Après densification complète, on obtient un verre transparent.

Des exemples concrets vont maintenant être donnés.

## EXEMPLE 1 PREPARATION D'UN GEL

On opère avec les quantités suivantes :
- HSi(OEt)$_3$ : 1 volume
- EtOH : 1 volume
- H$_2$O : 3 équivalents par rapport à HSi(OEt)$_3$

L'eau est ajoutée goutte à goutte sur la solution de HSi(OEt)$_3$ dans l'alcool éthylique refroidie à 0° C.

L'addition terminée, le mélange est maintenu à 0° C durant une demiheure. On le laisse ensuite revenir à température ambiante. Un gel se forme qui occupe tout le volume. On laisse vieillir ce gel durant 4 jours avant de le sécher sous vide (0,5 mm Hg) pendant 2 jours à température ambiante, puis 2 jours à 200° C.

Ce gel, sous forme de poudre, présente une surface spécifique BET de 490 m$^2$/g, un volume poreux (vp) de 270 mm$^3$/g, un diamètre moyen de pore (dp) de 40 A°, une prise en poids relative en atmosphère à 10 d'humidité (E 0,1) de 0,2 et à 60 d'humidité (E 0,6) de 0,8%.

## EXEMPLE 2 PREPARATION D'UN GEL

On opère avec les quantités suivantes :
HSi(OEt)$_3$ : 1 volume
EtOH : 10 volumes
H$_2$O : 3 équivalents par rapport à HSi(OEt)$_3$

L'eau est ajoutée goutte à goutte sous forte agitation au triéthoxysilane dilué dans l'éthanol.

Le mélange est maintenu sous forte agitation une semaine à température ambiante, puis une semaine à reflux de l'éthanol. Il se forme un microgel. On lave ce microgel par addition de 10 volumes d'eau distillée puis on agite pendant 4 jours. Le mélange est filtré, la poudre est lavée à l'eau distillée et séchée 2 jours sous vide (0,5 mmHg) à température ambiante, et 2 jours sous vide à 200° C.

Le gel présente une surface BET de 658 m²/g, un vp de 451 mm³/g, un dp de 40 Å.

## EXEMPLE 3 COMPARATIF

Cet exemple concerne aussi la préparation d'un gel mais à partir de tétraalcoxysilane.

(EtO)₄Si : 1 volume

EtOH : 1 volume

$H_2O$ : 4 équivalents par rapport à (EtO)₄Si.

On ajoute l'eau au tétraéthoxysilane dilué dans l'éthanol. Le mélange est porté à 60° C pendant 8 jours sous agitation. la poudre obtenue est filtrée, puis séchée à température ambiante à l'air durant 48 heures ensuite 12 heures sous 0,5 mm de Hg et enfin 12 heures à 120° C sous 0,5 mm de Hg.

On obtient un gel de surface BET de 334 m²/g, de dp < 20 A°, de E 0,1 égale à 5,1 et E 0,6 égale à 28 %.

## EXEMPLE 4 COMPARATIF PREPARATION D'UN GEL

On opère avec la quantités suivantes :

(MeO)₄Si : 1 volume

MeOH : 1 volume

$H_2O$ : 4 équivalents par rapport à (MeO)₄Si.

On ajoute l'eau au tétraméthoxysilane dilué dans le méthanol à température ambiante. On agite le mélange pendant 1 jour. Le mélange se gélifie au bout de 3 jours. Le gel obtenu est séché à l'air à température ambiante pendant 48 heures puis sous vide (0,5 mm Hg), deux jours à la température ambiante, et deux jours à 200° C.

## EXEMPLE 5 PREPARATION D'UN PRECURSEUR DE VERRE D'OXYNITRURES DE SILICIUM

Le gel, sous forme de poudre de l'exemple 1, est ensuite soumis à une nitruration selon le protocole suivant :

1°) Montée à 200° C sous azote, vitesse : 0,2° C/mn.

2°) Palier à 200° C d'une heure sous azote.

3°) Montée à 700° C sous ammoniac, vitesse 1° C/mn.

4°) Palier deux heures à 700° C sous ammoniac.

5°) Montée à 1 200° C sous azote, vitesse 3° C/mn.

6°) Palier d'une heure à 1 200° C sous azote.

7°) Refroidissement sous azote.

A l'issue du traitement, on obtient un produit présentant une teneur en azote de 4,7 % en poids.

## EXEMPLE 6 COMPARATIF

On fait subir au gel de l'exemple 4 une nitruration selon le même protocole que celui de l'exemple 5.

A l'issue du traitement, on obtient un produit d'une teneur en azote de 1 %.

## EXEMPLE 7

Cet exemple concerne le frittage du précurseur obtenu à l'exemple 5. Pour réaliser les mesures dilatométriques, on utilise des pastilles obtenues par compactage d'une poudre à température ambiante sous une pression de 75 MPa.

Au cours de l'étude dilatométrique, la vitesse de chauffe est de 10° C/mn et la température maximale atteinte est de 1 500° C.

Les résultats sont donnés dans le Tableau 1 ci-après.

Il est à noter qu'au cours de la contraction du précurseur de cet exemple, il se produit un changement de vitesse du phénomène à 1 140° C. Cette variation de vitesse apparaît sur la courbe différentielle de la courbe de frittage.

## EXEMPLE 8 COMPARATIF

On fritte dans les mêmes conditions que dans l'exemple 7, le précurseur obtenu dans l'exemple 6. Les résultats sont portés dans le Tableau 1.

### TABLEAU 1

|  | Exemple 7 | Exemple 8 comparatif |
|---|---|---|
| Température de début de frittage (° C) | 600 | 820 |
| Température à laquelle le frittage significatif du gel survient (° C) | 1 070 | 1 170 |
| Température de début de dilatation (° C) | 1 450 | 1 375 |

## EXEMPLE 9 PREPARATION D'UN VERRE D'OXYNITRURE DE SILICIUM

On part du précurseur obtenu à l'exemple 5 que l'on soumet à un pressage et à des traitements thermiques dans les conditions ci-dessous.

La presse utilisée est constituée d'un four vertical sur lequel est adaptée une presse hydraulique. Le four est à résistor en graphite chauffé par effet JOULE. La cellule de pressage est réalisée en graphite. L'échantillon -2,5 g environ- broyé finement, est disposé à l'intérieur d'une matrice entre deux pistons.

Le procédé de densification utilisé comporte deux traitements thermiques de déshydratation à des températures T1 (450° C) et T2 (700° C) suivis d'un "pressage éclair" jusqu' à une température T3 supérieure. La pression est identique pour toutes les manipulations et égale à 40 MPa. Elle est appliquée dès que la température est supérieure à T2 et relâchée lorsque la température maximale est atteinte.

La température maximale atteinte en fin de traitement de densification est de 1 550° C.

Le verre obtenu se présente sous forme d'un disque de 26 mm de diamètre et de 2,5 mm d'épaisseur environ. L'échantillon est amorphe aux rayons X.

Le module d' YOUNG mesuré par la méthode statique est de 82 GPa, ce qui correspond à un module vrai de 118 GPa.

Les autres caractéristiques du verre sont reportées au Tableau 2 ci-dessous.

## EXEMPLE 10 COMPARATIF

On part du précurseur de l'exemple 6 et on fait subir le même traitement de densification dans les mêmes conditions que celles indiquées dans l'exemple 9. On constate en comparant les produits que la courbe de densification du produit de l'exemple 5 est déplacée de 200° C vers les plus hautes températures par rapport à celle du produit de l'exemple 6. Les caractéristiques du verre ainsi obtenu sont indiquées au Tableau 2.

TABLEAU 2

| | Verre | Verre |
|---|---|---|
| | Exemple 9 | Exemple 10 |
| Teneur en azote | 4,7 | 1 |
| Densité apparente g/cm$^3$ | 2,38 | 2,22 |
| Porosité résiduelle | 0,8 | 0,08 |
| Perte au poids en mg/cm$^2$ attaque HF | 49 | 55 |

Bien entendu, l'invention n'est nullement limitée aux modes de réalisation décrits qui n'ont été donnés qu'à titre d'exemples. En particulier, elle comprend tous les moyens constituant des équivalents techniques des moyens décrits ainsi que leurs combinaisons si celles-ci sont mises en oeuvre dans le cadre de la protection comme revendiquée.

**Revendications**

1 - Gel de silice, caractérisé en ce qu'il est susceptible d'être obtenu par un procédé comprenant une étape d'hydrolyse d'un composé organosilane comportant au moins une liaison Si-H.

2 - Gel selon la revendication 1, caractérisé en ce qu'il est susceptible d'être obtenu par un procédé dans lequel le composé organosilane est un composé de formule $RxSiH_{4-x}$ où x est un nombre entier et R un radical organique, ce composé pouvant être notamment un trialcoxysilane.

3 - Gel selon la revendication 1 ou 2, caractérisé en ce qu'il est susceptible d'être obtenu par un procédé dans lequel le trialcoxysilane précité est un triéthoxysilane.

4 - Gel selon l'une des revendications précédentes, caractérisé en ce qu'il est susceptible d'être obtenu par un procédé dans lequel on effectue l'hydrolyse dans un solvant de préférence miscible à l'eau.

5 - Gel selon la revendication 4, caractérisé en ce qu'il est susceptible d'être obtenu par un procédé dans lequel le solvant est choisi dans le groupe comprenant les alcools, les cétones, les nitriles et les éthersoxydes.

6 - Gel selon la revendication 5, caractérisé en ce qu'il est susceptible d'être obtenu par un procédé dans lequel l'alcool précité est un alcool saturé, notamment l'éthanol.

7 - Gel selon l'une des revendications 4 à 6, caractérisé en ce qu'il est susceptible d'être obtenu par un procédé dans lequel, pour l'étape d'hydrolyse, le rapport volume de composé organosilane/volume de solvant est d'environ 1.

8 - Gel selon l'une des revendication 4 à 6, caractérisé en ce qu'il est susceptible d'être obtenu par un procédé dans lequel, pour l'étape d'hydrolyse, le rapport volume de composé organosilane/volume de solvant est d'environ 0,1.

9 - Gel selon l'une des revendications précédentes, caractérisé en ce qu'il est susceptible d'être obtenu par un procédé comprenant en outre une étape de séchage après une étape éventuelle de lavage.

10 - Gel selon la revendication 9, caractérisé en ce qu'il est susceptible d'être obtenu par un procédé dans lequel l'étape de séchage précitée comprend soit un séchage à température ambiante soit un séchage à température élevée soit les deux.

11 - Gel selon la revendication 9 ou 10, caractérisé en ce qu'il est susceptible d'être obtenu par un procédé dans lequel l'étape de séchage se fait au moins en partie sous vide.

12 - Gel selon l'une quelconque des revendications précédentes, caractérisé en ce qu'il est susceptible d'être obtenu par un procédé comprenant en outre un broyage notamment après l'étape de lavage et/ou l'étape de séchage.

13 - Gel de silice, qui, lorsqu' il est porté à une température de 200° C sous azote, puis chauffé à différentes températures Tn supérieures à 200° C sous ammoniac et enfin refroidi jusqu'à la température ambiante sous azote, montre une évolution structurale caractérisée par l'apparition ou la disparition des bandes ci-dessous sur son spectre infrarouge :

| Température $T_n$ ° C | Bandes (cm$^{-1}$) | | | | | | |
|---|---|---|---|---|---|---|---|
| | 940-970 | 1040 | 1550 | 2250 | 3400 | 3500 | 3600 |
| 300 | Apparition | Présente | | Présente | | | |
| 450 500 650 | Disparition | Se déplace vers des fréquences plus faibles | Apparition | Diminution progressive de 300 ° C à 900 ° C | Apparition | Apparition | Apparition Disparition |
| 700 | | | Disparition | | Se déplace vers 3 380 | Disparition | Apparition |
| >900 | | Se déplace vers 960 cm$^{-1}$ | | très faible | Disparition | Disparition | Disparition |

14 - Gel selon l'une quelconque des revendications précédentes, caractérisé en ce qu'il présente une surface spécifique BET d'au moins 480 m²/g plus particulièrement d'au moins 580 m²/g, un volume poreux d'au moins 260 mm³/g plus particulièrement d'au moins 360 mm³/g.

15 - Gel selon l'une quelconque des revendications précédentes , caractérisé en ce qu'il est hydrophobe à une température inférieure à 400 ° C, hydrophile à une température supérieure.

16 - Procédé de préparation d'un gel de silice, caractérisé en ce qu'on hydrolyse un composé organosilane comportant au moins une liaison Si-H.

17 - Procédé selon la revendication 16, caractérisé en ce qu'on hydrolyse un composé de formule $R_xSiH_{4-x}$ où x est un nombre entier et R un radical oraganique, ce composé pouvant être notamment un trialcoxysilane.

18 - Procédé selon la revendication 16 ou 17, caractérisé en ce qu'on effectue l'hydrolyse dans un solvant, de préférence miscible à l'eau.

19 - Procédé selon la revendication 18, caractérisé en ce qu'on choisit le solvant dans le groupe comprenant les alcools, les cétones, les nitriles et les éthers-oxydes.

20 - Procédé selon la revendication 19, caractérisé en ce que l'alcool est un alcool saturé, plus particulièrement l'éthanol.

21 - Procédé selon l'une des revendications 18 à 20, caractérisé en ce que pour l 'hydrolyse, le rapport volume de composé organosila ne/volume de solvant est d'environ 1.

22 - Procédé selon l'une des revendications 18 à 20, caractérisé en ce que pour l'hydrolyse, le rapport volume de composé organosila ne/volume de solvant est d'environ 0,1.

23 - Procédé selon l'une des revendications 16 à 22, caractérisé en ce qu'il comprend en outre une étape de séchage après une étape éventuelle de lavage, l'étape de séchage pouvant notamment se faire, au moins en partie, sous vide.

24 - Procédé selon la revendication 23, caractérisé en ce que l'étape de séchage précité comprend soit un séchage à température ambiante soit un séchage à température élevée, soit les deux.

25 - Précurseur de verre d'oxynitrure de silicium, à base de silice et d'azote, caractérisé en ce qu'il est susceptible d'être obtenu par une nitruration du gel selon l'une quelconque des revendications 1 à 15.

26 - Précurseur selon la revendication 25, caractérisé en ce qu'il est susceptible d'être obtenu par une nitruration du gel précité comprenant un traitement thermique dudit gel à une température d'au moins 200 ° C en présence d'un agent nitrurant, notamment l'ammoniac.

27 - Précurseur selon l'une des revendications 25 ou 26, caractérisé en ce qu'il est susceptible d'être obtenu par une nitruration du gel précité comprenant en outre, notamment préalablement au traitement thermique, un séchage, notamment sous azote.

28 - Précurseur selon l'une des revendications 25 à 27, caractérisé en ce qu il est susceptible d'être obtenu par une nitruration du gel précité, dans laquelle le traitement thermique se fait au moins en partie à température variable.

29 - Précurseur selon l'une des revendications 25 à 28, caractérisé en ce qu il est susceptible d'être obtenu par une nitruration du gel précité comprenant en outre, notamment postérieurement au traitement thermique, un traitement sous azote à une température supérieure à celle du traitement précité, plus particulièrement d'au moins 700° C, ce traitement sous azote pouvant se faire, au moins en partie, à température variable dans le temps.

30 - Précurseur de verre d'oxynitrure de silicium, à base de silice et d'azote, caractérisé en ce qu'il présente, lorsqu'il est soumis à une montée en température une phase de frittage débutant vers 600° C et se terminant vers 1 450° C, cette phase de frittage étant suivie, vers 1 450° C d'une phase de dilatation.

31 - Précurseur selon la revendication 30, caractérisé en ce que son frittage présente un changement de vitesse entre 1 120° C et 1 200° C.

32 - Précurseur selon l'une des revendications 25 à 31, caractérisé en ce que sa teneur en azote est d'au moins 3 % en poids, plus particulièrement d'au moins 4 %.

33 - Procédé de préparation d'un précurseur de verre d'oxynitrure de silicium, à base de silice et d'azote, caractérisé en ce qu'on nitrure un gel selon l'une quelconque des revendications 1 à 15.

34 - Procédé selon la revendication 33, caractérisé en ce que la nitruration du gel comprend un traitement thermique dudit gel à une température d'au moins 200° C en présence d'un agent nitrurant, notamment l'ammoniac, ledit traitement thermique pouvant se faire, au moins en partie, à température variable dans le temps.

35 - Procédé selon la revendication 33 ou 34, caractérisé en ce que la nitruration du gel comprend en outre, notamment, préalablement au traitement thermique, un séchage, en particulier sous azote.

36 - Procédé selon l'une des revendications 33 à 35, caractérisé en ce que la nitruration du gel comprend en outre, notamment postérieurement au traitement thermique, un traitement sous azote à une température d'au moins 700° C plus particulièrement d'au moins 1 100° C, ce traitement sous azote pouvant se faire, au moins en partie, à température variable.

37 - Verre d'oxynitrure de silicium, caractérisé en ce qu'il est essentiellement à base de silice et d'azote, en ce qu'il présente une teneur en azote d'au moins 3 % en poids, plus particulièrement d'au moins 4 %, une densité d'au moins 2,25 plus particulièrement d'au moins 2,30.

38 - Verre d'oxynitrure de silicium selon la revendication 37, caractérisé en ce qu'il présente une température de début de ramollissement d'au moins 900° C.

39 - Verre d'oxynitrure de silicium selon l'une des revendications 31 ou 32, caractérisé en ce qu'il présente un module d'YOUNG dynamique d'au moins 80 GPa.

40 - Verre d'oxynitrure de silicium selon l'une des revendications 37 à 39, caractérisé en ce que, lorsqu'il est immergé pendant 30 heures à 20° C dans une solution d'acide fluorhydrique de concentration volumique de 50 %, il présente une perte en poids d'au plus 50 mg/cm².

41 - Verre d'oxynitrure de silicium, caractérisé en ce qu'il est susceptible d'être obtenu par densification du précurseur selon l'une quelconque des revendications 25 à 41.

42 - Verre selon la revendication 41, caractérisé en ce qu'il est susceptible d'être obtenu par une densification du précurseur précité, cette densification comprenant un pressage et au moins un traitement thermique notamment à une température comprise entre 1 500 et 1 600° C.

43 - Verre selon la revendication 42, caractérisé en ce qu'il est susceptible d'être obtenu par une densification du précurseur précité, cette densification comprenant en outre un ou deux traitements thermiques de deshydratation notamment à des températures d'au moins 400° C et d'au moins 650° C respectivement.

44 - Procédé de préparation d'un verre d'oxynitrure de silicium, caractérisé en ce qu'on densifie un précurseur selon l'une quelconque des revendications 25 à 32.

45 - Procédé selon la revendication 44, caractérisé en ce que la densification du précurseur précité comprend un pressage et au moins un traitement thermique notamment à une température pouvant atteindre 1 600° C.

46 - Procédé selon la revendication 45, caractérisé en ce que la densification du précurseur précité comprend en outre un ou deux traitements thermiques de déshydratation notamment à des températures d'au moins 400° C et d'au moins 650° C respectivement.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 791 808  (THOMAS)<br>* Revendication 1 * | 1-12,16 -24 | C 03 B    8/02<br>C 03 C    3/06<br>C 01 B   33/155<br>C 03 C    1/00 |
| Y |  | 25-28, 32-35, 37 |  |
|  | --- |  |  |
| X | CHEMICAL ABSTRACTS, vol. 78, no. 6, 12 février 1973, page 27, résumé, no. 30616h, Columbus, Ohio, US; I.B. SLINYAKOVA et al.: "Synthesis and adsorption properties of mixed adsorbents of silico-polyhydridosiloxanes", & UKR. KHIM. ZH. (RUSS. ED) 1972, 38(9), 900-4<br>* En entier * | 1-12,16 -24 |  |
| Y | IDEM | 25-28, 32-35, 37 |  |
|  | --- |  |  |
| X | CHEMICAL ABSTRACTS, vol. 109, no. 8, 22 août 1988, page 341, résumé no. 60073e, Columbus, Ohio, US; & JP-A-63 89 420 (NIPPON SHEET GLASS) 20-04-1988<br>* En entier * | 1-12,16 -24 | **DOMAINES TECHNIQUES RECHERCHES (Int. Cl.5)**<br><br>C 03 C<br>C 03 B<br>C 01 B |
| Y | IDEM | 25-28, 32-35, 37 |  |
|  | ---                            -/- |  |  |

Le présent rapport a été établi pour toutes les revendications

| Lieu de la recherche | Date d'achèvement de la recherche | Examinateur |
|---|---|---|
| LA HAYE | 09-03-1990 | VAN BOMMEL L. |

Office européen
des brevets

RAPPORT DE RECHERCHE EUROPEENNE

Numero de la demande

EP 89 40 3577

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | JOURNAL OF NON-CRYSTALLINE SOLIDS, vol. 83, nos. 1/2, juin 1986, pages 208-222, Amsterdam, NL; K. KAMIYA et al.: "Nitrogen-containing SiO2 glass fibers prepared by ammonolysis of gels made from silicon alkoxides" * Page 208, résumé * | 25-28, 32-35, 37 | |
| | | | DOMAINES TECHNIQUES RECHERCHES (Int. Cl.5) |

Le présent rapport a été établi pour toutes les revendications

| Lieu de la recherche | Date d'achèvement de la recherche | Examinateur |
|---|---|---|
| LA HAYE | 09-03-1990 | VAN BOMMEL L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P0402)